Europäisches Patentamt

European Patent Office

Office européen des brevets

(19)

(11) Veröffentlichungsnummer: **0 325 560**
**A1**

(12) **EUROPÄISCHE PATENTANMELDUNG**

(21) Anmeldenummer: **89810019.3**

(22) Anmeldetag: **11.01.89**

(51) Int. Cl.⁴: **H 01 S 3/108**
**H 01 S 3/136**

(30) Priorität: **20.01.88 CH 183/88**

(43) Veröffentlichungstag der Anmeldung:
**26.07.89 Patentblatt 89/30**

(84) Benannte Vertragsstaaten:
**CH DE FR GB IT LI NL SE**

(71) Anmelder: **CIBA-GEIGY AG**
**Klybeckstrasse 141**
**CH-4002 Basel (CH)**

(72) Erfinder: **Wildmann, Daniel, Dr.**
**Buchserstrasse 36**
**CH-8157 Dielsdorf (CH)**

(54) **Laseranordnung.**

(57) Bei einer Laseranordnung wird dem vollreflektierenden Spiegel (3) eines Lasers (1) eine schnelle Fotodiode (9) zugeordnet, deren Ausgangssignal in einem Komparator (18) mit einer an einen Potentiometer (21) einstellbaren Referenzspannung verglichen wird, um beim Überschreiten der von der Fotodiode (9) erfaßten Leistungsdichte im Resonator (2, 3) des Lasers den Laser zum Schutz eines Frequenzverdopplerkristalls (6) abzuschalten, indem ein Güteschalter (5) und/oder eine Verschlußblende (7) umgeschaltet wird.

EP 0 325 560 A1

Bundesdruckerei Berlin

## Beschreibung

## Laseranordnung

Die Erfindung betrifft eine Laseranordnung mit einem in einem durch einen voll- und einen teilreflektierenden Spiegel begrenzten optischen Resonatorraum, in dem ein aktives Lasermedium sowie ein Kristall zur Erzeugung zweiter und höherer Harmonischer angeordnet sind.

Eine derartige Laseranordnung mit einem Q-switch zum Steuern des gepulsten Laserbetriebs ist beispielsweise aus der US-PS 4 617 666 bekannt und verfügt über einen sogenannten Intracavity-SHG-Kristall zur Frequenzverdopplung aufgrund des von manchen Kristallen gezeigten Effektes der Erzeugung einer zweiten Harmonischen (Second Harmonic Generation). Die Verdopplung der Lichtfrequenz in Lasern ist ein relativ einfaches Verfahren, um das Spektrum der zur Verfügung stehenden Frequenzen zu vergrößern. Dies geschieht insbesondere bei Lasern, deren Leistungen im Bereich zwischen 80 und 100 Watt liegen und die beispielsweise zum Gravieren von Kunststoffoberflächen oder Metalloberflächen eingesetzt werden. Dabei ist es häufig erwünscht, hohe Ausgangsleistungen zu erzielen, wobei die Leistungsdichten im Resonator nahe an der Zerstörschwelle der SHG Kristalle oder deren Antireflexbeschichtungen liegen. Dies führt jedoch leicht zu einer Zerstörung der teuren SHG Kristalle, wenn im industriellen Einsatz stehende Laser nicht von fachkundigem Personal gewartet werden können und rauhe Umgebungsbedingungen, insbesondere thermische Veränderungen in der Laserkonfiguration die Justierung der Komponenten des Lasers verändern, so daß im Resonator erhöhte Leistungsdichten auftreten, die den SHG Kristall überbelasten.

In der US-PS 4 181 899 ist ein Laser zur Erzeugung zweiter Harmonischer in einem nichtlinearen Kristall beschrieben, dessen Fundamentalwellenlänge 1,06 μm beträgt. Die Erzeugung der Harmonischen ist durch das Aufheizen des Kristalls infolge von thermooptischen Effekten begrenzt, die eine Phasenfehlanpassung bewirken und den Umwandlungswirkungsgrad reduzieren. Diese Einschränkung wird bei dem bekannten Laser durch Abstimmen der Laserwellenlänge überwunden, um die Phasenfehlanpassung zu kompensieren und dadurch einen besseren Umwandlungswirkungsgrad für die Erzeugung der Harmonischen zu erreichen. Das Abstimmen erfolgt dabei durch Erfassen der Kristalltemperatur des bekannten mit einem Q-switch versehenen Lasers. Mit Hilfe eines dielektrischen Polarisators wird ein Teil des frequenzverdoppelten Ausgangslichtes mit einer Wellenlänge von 0,53 μm auf einen Lichtdetektor ausgekoppelt, der es gestattet, die Intensität des frequenzverdoppelten Ausgangslichtes zu erfassen, um mit Hilfe einer variablen Betriebsspannung ein Abstimmungselement nachzustimmen.

Ein Laser-Oszillator mit Auskopplungsmodulator gemäß der CH-PS 544 426 verfügt über einen Fotodetektor, der das über den Vollreflektor mit einer Transmission von 0,1% des Resonators austretende Licht erfaßt, dessen Leistung der Lichtleistungsdichte im Laserresonator proportional ist. Der optische Resonator weist als modulierbaren Auskoppelspiegel ein abstimmbares Interferometer auf. Die bekannte Anordnung dient dazu, mit Hilfe des Fotodetektors bei einem Durchstimmen des Interferometers die Laserlichtleistung zu messen, wobei das proportionale elektrische Signal einem Spitzenwertdetektor und einem Komparator zugeführt werden kann.

Ein Laserstrahlüberwachungssystem gemäß der US-PS-4 544 839 verfügt über eine im externen Strahlengang des Lasers vorgesehene transparente Scheibe aus Zinkselenid, die etwa 75 % der Energie des Laserstrahls eines $CO_2$ Lasers hindurchläßt. Der aufgrund einer Neigung mit einem Neigungswinkel von 83° ausgekoppelte Teilstrahl beaufschlagt über eine Fokussierlinse einen lichtempfindlichen Sensor. Der Sensor ist mit einem Verstärker verbunden, dessen Ausgang eine Verschlußblende des Lasers steuert.

Aus der FR-PS 2 171 866 sind ein Verfahren und eine Vorrichtung zur Stabilisierung der Energie eines Laserstrahls bekannt, die es auch gestatten, die Emission des Laserstrahls zu unterbrechen, wenn dieser eine vorherbestimmte Intensität übersteigt. Die bekannte Vorrichtung verfügt über einen Auskoppelspiegel für einen Teil der Laserlichtleistung, die eine fotoelektrische Zelle beaufschlagt und mit Hilfe eines Komparators einen Leistungsverstärker ansteuert, an den die Pumplichtquelle angeschlossen ist. Durch den Vergleich des elektrischen Signals mit einem Referenzsignal ist es möglich, die Funktion der Pumplichtquelle zu unterbrechen, wenn die vorherbestimmte Leistung überschritten wird.

Der Erfindung liegt die Aufgabe zugrunde, eine Laseranordnung der eingangs genannten Art zu schaffen, bei der zuverlässig und einfach eine Erfassung der Leistungsdichte im Resonator erfolgt und der Frequenzverdopplerkristall gegen gefährliche Leistungsdichten im Resonator geschützt ist.

Diese Aufgabe wird erfindungsgemäß dadurch gelöst, daß außerhalb des Resonatorraumes in etwa axial fluchtend zur Resonatorlängsachse in der Nähe des vollreflektierenden Spiegels eine Leistungssensoranordnung vorgesehen ist, die eine Streuscheibe, einen die frequenzverdoppelte Wellenlänge des Lasermediums sowie die Wellenlängen des Pumplichtes absorbierenden Filter und einen Lichtsensor aufweist, der mit einer Komparatorschaltung verbunden ist, durch die eine Vorrichtung zum Abschalten des Lasers angesteuert ist.

Der Lichtsensor besteht vorzugsweise aus einer schnellen Fotodiode, und die Vorrichtung zum Abschalten des Lasers umfaßt einen Güteschalter (Q-switch) und/oder eine Verschlußblende (shutter) zum Abschalten des Lasers durch Verschlechterung der Resonatorgüte. Der Ausgang der Komparatorschaltung ist mit einem Monoflop oder mit einer Flip-Flop-Schaltung verbunden, die beim Überschreiten der Leistungsdichte kippt und sicherstellt, daß die Laseranordnung bis zum Betätigen eines Rücksetzschalters ausgeschaltet bleibt.

Dadurch daß eine Streuscheibe vorgesehen ist, entfällt das genaue Justieren oder ein Nachjustieren des Strahlenganges für den Lichtsensor. Das Filter verhindert, daß das Pumplicht, z.B. das Lampenlicht eines Nd:YAG Lasers, oder das frequenzverdoppelte Licht aus dem Resonatorraum zum Lichtsensor gelangt. Dies führt zu einem so guten Signal/ Rauschverhältnis, daß die vom vollreflektierenden Spiegel durchlassene Lichtenergie mit der Fundamentalwellenlänge ausreicht, um trotz der am Spiegel austretenden höheren Lichtenergie mit der halben Wellenlänge und dem Wellenlängenspektrum des Pumplichtes ein auswertbares Signal zu erhalten.

Weitere Einzelheiten und zweckmäßige Ausgestaltungen der Erfindung sind in den Unteransprüchen gekennzeichnet.

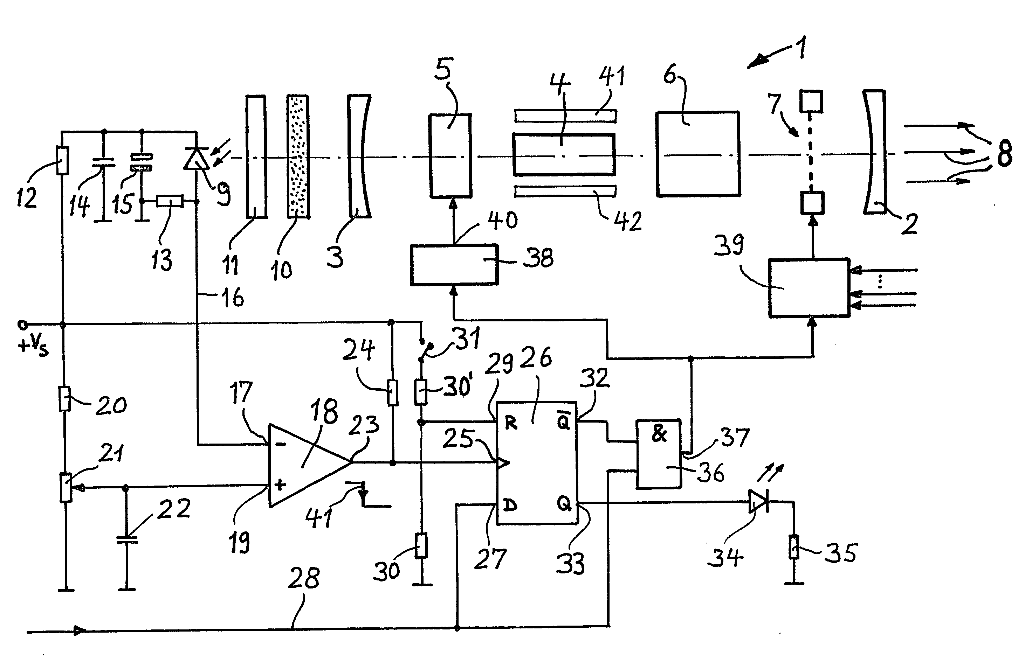

Nachfolgend wird ein Ausführungsbeispiel der Erfindung anhand der Zeichnung näher erläutert, die in einer einzigen Figur schematisch den Aufbau der erfindungsgemäßen Laseranordnung darstellt.

Die Laseranordnung umfaßt einen Laser 1 mit einem optischen Resonator, der einerseits von einem die Fundamentalwellenlänge des Lasers 1 vollreflektierenden und für die frequenzverdoppelte Strahlung durchlässigen Auskoppelspiegel 2 und andererseits von einem Vollreflektor 3 begrenzt ist, der die Fundamentalwellenlänge fast vollständig reflektiert, während er für die frequenzverdoppelte Strahlung im wesentlichen transparent ist. Im Resonatorraum befindet sich ein aktives Medium 4 mit zugeordneten Lampen 41 und 42 in der bei einem Nd:YAG Laser üblichen Weise. In der ebenfalls bereits bekannten Art und Weise ist ein Q-switch oder Güteschalter 5 vorgesehen, der es gestattet, einen Pulsbetrieb des Lasers 1 mit einer Repetitionsfrequenz zwischen etwa 1 kHz und 30 kHz zu steuern. Beim Aktivieren des Güteschalters entstehen optische Verluste, die so groß sind, daß die Schwingungen des Lasers 1 unterbrochen werden. Wenn die zur Erzeugung des Pumplichtes vorgesehenen Lampen 41 und 42 während der niedrigen Güteperiode angeschaltet bleiben, wird im aktiven Medium 4 Energie infolge einer Inversion der Besetzungszahlen der Energieniveaus gespeichert. Beim Ausschalten des Güteschalters 5, d.h. bei der Rückkehr in seinen hohen Gütezustand erfolgt ein Übergang von einem oberen in ein unteres Energieniveau unter Aussenden eines sehr intensiven Lichtimpulses mit beispielsweise 1,06 $\mu$m Wellenlänge.

Wie der Zeichnung entnommen werden kann, ist auf der dem Güteschalter 5 gegenüberliegenden Seite des aktiven Mediums 4 ein Frequenzverdopplerkristall 6 oder SHG Kristall vorgesehen, durch das Licht mit einer Wellenlänge von 532 nm erzeugt wird, wenn durch richtiges Justieren die Bedingung für die erforderlichen Phasenabstimmung (phase-matching) erfüllt ist. Bei einer schlechten Justierung des Frequenzverdopplerkristalls 6 ergibt sich eine kleine Konversionseffizienz und damit eine kleinere Absorption, was zu einer unerwünschten Erhöhung der Leistungsdichte im Resonator führt.

Falls der Frequenzverdopplerkristall 6 beispielsweise durch thermische Einflüsse oder durch eine mechanische Schockeinwirkung aus der justierten Position gebracht wird, führt dies zu einem sprunghaften Anstieg der Leistungsdichte im Resonator, die mit der nachfolgend erörterten Sicherheitsschaltung vermieden werden soll, welche einerseits den Güteschalter 5 und andererseits auch eine Verschlußblende 7 (intracavity shutter) steuert.

Für den Fachmann liegt es auf der Hand, daß die nachfolgend beschriebene Sicherheitsschaltung nicht nur für den als Ausführungsbeispiel beschriebenen gepulsten Laser 1 sondern auch für kontinuierliche Laser verwendet werden kann, da die Leistungsdichte im Resonator des Lasers 1 als Funktion der Zeit erfaßt wird und der Laser 1 bei jedem, insbesondere auch nur kurzzeitigem Überschreiten einer gewissen einstellbaren Leistungsschwelle abschaltbar ist.

Neben dem über den Auskoppelspiegel 2 ausgekoppelten und in der Zeichnung durch drei Pfeile 8 veranschaulichten frequenzverdoppelten Ausgangslicht erfolgt bei dem Laser 1 auch an dem Vollreflektor 3 eine Transmission des frequenzverdoppelten Lichtes und eine gewisse Resttransmission des Lichtes mit der Fundamentalwellenlänge, dessen Intensität ausreicht, um ein Maß für die Leistungsdichte der fundamentalen Wellenlänge im Innern des Lasers 1 darzustellen.

Die Auswertung der Resttransmission am Vollreflektor 3 geschieht in der Weise, daß eine schnelle Fotodiode 9 mit dem am Vollreflektor 3 austretenden Licht beaufschlagt wird. Um von einer kritischen Justierung und einem Wandern der beleuchteten Fläche auf dem Vollreflektor 3 unabhängig zu sein, ist der Fotodiode 9 und dem Vollreflektor 3 eine Streuscheibe 10 zugeordnet, die das am nur theoretisch 100 % des Lichtes spiegelnden Vollreflektor 3 austretende Licht in einen großen Streuwinkel möglichst homogen streut. Die Streuscheibe 10 ist eine Überfangstreuscheibe (Marata-Scheibe), bei der ein optisch klarer oder schwach getrübter Träger mit einer dünnen trüben Schicht mit Volumenstreuung überzogen ist. Um eine Erfassung der Leistungsdichte im Innern des Lasers 1 für die fundamentale Wellenlänge (1,06 um) unabhängig von der frequenzverdoppelten Wellenlänge (532 nm) durchzuführen, ist zwischen der Fotodiode 9 und der Streuscheibe 10 ein Infrarotfilter 11 vorgesehen, das möglichst nur für die größere fundamentale Wellenlänge gut durchlässig und für die halbe Wellenlänge sowie das Pumplicht undurchlässig ist. Das Infrarotfilter 11 verhindert somit auch den Einfall des von den Lampen 41 und 42 ausgesandten Pumplichtes auf die Fotodiode 9.

Je nach der Intensität des die Fotodiode 9 beaufschlagenden Lichtes fließt durch die Fotodiode 9 ein Meßstrom, der ein Maß für die über die Intensität des Lichtes mit der fundamentalen Wellenlänge erfaßten Leistungsdichte im Innern des Lasers 1 ist und von der nachfolgend beschriebenen Schutzschaltung ausgewertet wird.

Die Kathode der Fotodiode 9 ist über einen Vorwiderstand 12 an den positiven Pol $+V_S$ der

Speisespannungsquelle der Schutzschaltung angeschlossen. Die Anode der Fotodiode 9 ist über einen Arbeitswiderstand 13 mit der Schaltungsmasse verbunden. Wie man dem Schaltbild entnehmen kann, ist die Kathode der Fotodiode 9 weiterhin über einen Siebkondensator 14 und einen Speicherkondensator 15 mit der Schaltungsmasse verbunden.

Das am Arbeitswiderstand 13 abfallende Spannungssignal gelangt über eine Leitung 16 zum invertierenden Eingang 17 eines als Komparator 18 geschalteten Operationsverstärkers, dessen nichtinvertierender Eingang 19 mit einer einstellbaren Referenzspannung beaufschlagt ist. Die einstellbare Referenzspannung wird mit Hilfe eines Spannungsteilers aus einem festen Widerstand 20 und einem Potentiometer 21 aus der Speisespannung der Schutzschaltung gewonnen. Zur Glättung und Entkopplung ist der bewegliche Abgriff des Potentiometers 21 über einen Kondensator 22 geerdet.

Der Ausgang 23 des Komparators 18 ist einerseits über einen Lastwiderstand 24 mit der Spannungsquelle und andererseits mit dem Takteingang 25 eines D-Flipflops verbunden.

Der Informationseingang 27 des D-Flipflops ist an einer Betriebssteuerleitung 28 angeschlossen, die Steuersignale einer Logikschaltung, insbesondere für die Steuerung des Güteschalters 5, führt.

Der Rücksetzeingang 29 des D-Flipflops liegt am mittleren Abgriff eines Spannungsteilers aus zwei Festwiderständen 30 und 30', die mit einem Rücksetztaster 31 in Serie geschaltet sind, um aus der Spannungsversorgung der Schutzschaltung durch Drücken des Rücksetztasters 31 einen Rücksetzimpuls für das D-Flipflop 26 zu erzeugen. Beim Rücksetzen des D-Flipflops 26 nimmt dieses einen Zustand ein, bei dem der invertierte Ausgang 32 auf logisch 1 liegt, während der nichtinvertierte Ausgang 33 die dem logischen Pegel 0 zugeordnete Spannung liefert.

Wie der Zeichnung entnommen werden kann, ist der nichtinvertierte Ausgang 33 mit einer Leuchtdiode 34 verbunden, deren Kathode über einen Schutzwiderstand 35 an Masse liegt. Die Leuchtdiode 34 dient zum Anzeigen des inneren Zustands der Schutzschaltung und leuchtet immer dann auf, wenn infolge eines Überschreitens der zulässigen Leistungsdichte im Laser 1 ein Abschalten des Lasers 1 erfolgt ist.

Die am invertierten Ausgang 32 und auf der Betriebssteuerleitung 28 liegenden Signale speisen die Eingänge eines UND-Gatters 36, dessen Ausgang 37 einerseits mit dem Eingang eines Treibers 38 für den Pulsbetrieb des Güteschalters 5 und andererseits mit dem Eingang eines Sicherheitssystems 39 verbunden ist. Das Sicherheitssystem 39 führt eine UND-Verknüpfung einer Reihe von sicherheitsrelevanten Signalen durch und veranlaßt beim Fehlen eines dieser Signale ein Schließen der Verschluß blende 7 (intracavity shutter), so daß es nicht möglich ist, den Laser 1 zu betreiben. Im Hinblick auf die verhältnismäßig geringe Schaltgeschwindigkeit der Verschlußblende 7 ist es vorgesehen, den Güteschalter 5 dauernd einzuschalten, wenn mit kurzer Verzögerungszeit eine Unterbrechung der Erzeugung von Laserlicht infolge eines Überschreitens der zulässigen Leistungsdichte erfolgen soll. Ein 1-Signal am Eingang des Treibers 38 erzeugt somit am Ausgang 40 des Treibers 38 eine Spannung, durch die der Güteschalter 5 periodisch ausgeschaltet wird, so daß Laserimpulse erzeugt werden können. Wenn das UND-Gatter 36 jedoch über den invertierten Ausgang 32 des D-Flipflops 26 gesperrt wird, liegt am Ausgang 40 des Treibers 38 ein Signal an, das den Güteschalter 5 dauernd eingeschaltet sein läßt, so daß keine Laserimpulse erzeugt werden können.

Zum Einstellen der Referenzspannung des Komparators 18 am Potentiometer 21 wird der Frequenzverdopplerkristall 6 vorübergehend aus dem Resonator des Lasers 1 entfernt und der Auskoppelspiegel 2, der im frequenzverdoppelten Betrieb des Lasers 1 einen Vollreflektor für die fundamentale Wellenlänge darstellt, gegen einen Spiegel mit 90 % Reflexion bei der fundamentalen Wellenlänge ausgetauscht. Der Laser 1 wird mit einer kleinen Repeti tionsfrequenz betrieben, wobei die Pulslänge beispielsweise zwischen 100 und 300 nsec. liegt. Da die Spitzenleistung mit steigender Repetitionsfrequenz sinkt, ist es möglich, die oben beschriebene Schutzschaltung beim Betrieb mit einer kleinen Repetitionsfrequenz zu justieren. Hierzu wird die maximal erreichbare Spannung am Arbeitswiderstand 13 bzw. invertierenden Eingang 17 des Komparators 18 gemessen und als Referenzspannung am Potentiometer 21 eingestellt. Statt durch direktes Messen der betroffenen Spannungen ist es auch möglich, das Potentiometer 21 in Richtung auf eine größere Referenzspannung so lange zu verstellen, bis gerade noch keine Umschaltung am Komparator 18 und dauernde Einschaltung des Güteschalters 5 erfolgt. Ein derartiges Justieren garantiert, daß die Leistungsdichte im Laser 1 nie über den vorbestimmten Wert, den die optischen Komponenten im Resonator vertragen, steigen kann. Die Größenordnung der Leistungsdichte im Resonator kann bei bekannter Transmission des Auskoppelspiegels 2 auch berechnet werden. Der Komparator 18 schaltet immer dann ab, wenn die Leistungsdichte im Resonator des Lasers 1 höher wird als die mit der Referenzspannung am Potentiometer 21 eingestellte Leistungsdichte. Dieses Signal wird in der Schutzschaltung "eingefroren" und kann nicht nur zum Schließen der langsamen Verschlußblende 7, sondern auch zum Steuern des Güteschalters 5 über eine logische Schaltung verwendet werden, um ein Abschalten des Lasers 1 innerhalb von etwa 2 μsec zu gewährleisten.

Nach dem Initialisieren der Schutzschaltung befindet sich der D-Flipflop 26 im zurückgesetzten Zustand, wobei an seinem invertierten Ausgang 32 ein 1-Signal liegt, so daß auf der Betriebssteuerleitung 28 ankom mende Signale über das UND-Gatter 36 zum Treiber 38 für den Güteschalter 5 und zum Sicherheitssystem 39 weitergeleitet werden. Infolge des Pulsbetriebs des Lasers 1 entstehen am Arbeitswiderstand 13 den Laserimpulsen zugeordnete Spannungsimpulse. Wenn der Justiervorgang des Potentiometers 21 beendet ist und der Frequenzverdopplerkristall 6 sich wieder in der erforderlichen Justierposition im Innern des Resonatorraums des Lasers 1 befindet, ist die Höhe der am Arbeitswiderstand 13 anfallenden Spannungsimpulse kleiner als die mit dem Potentiometer 21 abgegriffene einstellbare Referenzspannung. Aus diesem Grunde liegt am Ausgang 23 des Komparators 18 immer ein hohes Signal an. Ebenfalls ein hohes Signal oder 1-Signal beaufschlagt dauernd während der vorgesehenen Pulsbetriebszeit den Informationseingang 27 des D-Flipflops. Am Ausgang 33 liegt eine so geringe Spannung an, daß die Leuchtdiode 34 nicht leuchtet.

Wenn aufgrund einer Störung die Leistungsdichte im Laser 1 eine für den Frequenzverdopplerkristall 6 gefährliche Größe erreicht, tritt am Arbeitswiderstand 13 ein Spannungsimpuls auf, der größer als die Referenzspannung am nichtinvertierenden Eingang 19 des Komparators 18 ist, so daß am Ausgang 23 des Komparators 18 die mit den Bezugszeichen 41 veranschaulichte abfallende Flanke entsteht, die dem Takteingang 25 des D-Flipflops 26 zugeführt wird, so daß dieses den am Informationseingang 27 liegenden logischen Status übernimmt. Aus diesem Grunde schaltet das D-Flipflop in den 1-Zustand um, so daß am Ausgang 33 eine Spannung auftritt, die zu einem Leuchten der Leuchtdiode 34 führt und wobei am invertierten Ausgang 32 ein Null-Signal auftritt, durch das das UND-Gatter 36 gesperrt wird und somit der Treiber 38 des Güteschalters 5 und das Sicherheitssystem 39 ebenfalls gesperrt werden. Der Treiber 38 bewirkt dann, daß der Güteschalter 5 dauernd eingeschaltet bleibt. Das Sicherheitssystem 39 bewirkt mit einer kurzen Verzögerung, daß die Verschlußblende 7 geschlossen wird.

**Patentansprüche**

1. Laseranordnung mit einem in einem durch einen voll- und einen teilreflektierenden Spiegel (2, 3) begrenzten optischen Resonatorraum, in dem ein aktives Lasermedium (4) sowie ein Kristall (6) zur Erzeugung zweiter und höherer Harmonischer angeordnet sind, **dadurch gekennzeichnet,** daß außerhalb des Resonatorraumes in etwa axial fluchtend zur Resonatorlängsachse in der Nähe des vollreflektierenden Spiegels (3) eine Leistungssensoranordnung (9) vorgesehen ist, die eine Streuscheibe (10), einen die frequenzverdoppelte Wellenlänge des Lasermediums (4) sowie die Wellenlänge des Pumplichtes (41, 42) absorbierenden Filter (11) und einen Lichtsensor (9) aufweist, der mit einer Komparatorschaltung (18) verbunden ist, durch die eine Vorrichtung (5, 7) zum Abschalten des Lasers (1) angesteuert ist.

2. Laseranordnung nach Anspruch 1 **dadurch gekennzeichnet,** daß der Lichtsensor eine schnelle Fotodiode (9) ist.

3. Laseranordnung nach Anspruch 1 oder 2 **dadurch gekennzeichnet,** daß die Laseranordnung ein Nd:YAG Laser ist.

4. Laseranordnung nach einem der Ansprüche 1 bis 3, **dadurch gekennzeichnet,** daß das Filter (11) ein Absorptionsfilter ist, durch das an der Rückseite des vollreflektierenden Spiegels (3) austretende und von der Streuscheibe (10) gestreute Licht ohne abbildende Optik den Lichtsensor (9) beaufschlagt.

5. Laseranordnung nach einem der vorstehenden Ansprüche, **dadurch gekennzeichnet,** daß die Streuscheibe (10) eine über einen großen Raumwinkel homogene Überfangstreuscheibe ist.

6. Laseranordnung nach einem der vorstehenden Ansprüche, **dadurch gekennzeichnet,** daß die Referenzspannung (19) der Komparatorschaltung (18) einstellbar ist.

7. Laseranordnung nach einem der Ansprüche 1 bis 6, **dadurch gekennzeichnet,** daß die Vorrichtung zum Abschalten des Lasers (1) einen Güteschalter (5) umfaßt, der über eine Treiberstufe (38) mit der Komparatorschaltung (18) verbunden ist.

8. Laseranordnung nach einem der Ansprüche 1 bis 7, **dadurch gekennzeichnet,** daß die Vorrichtung zum Abschalten des Lasers (1) eine im Resonatorraum angeordnete Verschlußblende (7) umfaßt.

9. Laseranordnung nach Anspruch 8, **dadurch gekennzeichnet,** daß die Verschlußblende (7) an ein Sicherheitssystem (39) angeschlossen ist, das nur dann ein Signal zum Offenhalten der Verschlußblende (7) liefert, wenn alle an das Sicherheitssystem angeschlossenen Überwachungssignale eine Freigabe des Laserbetriebs anzeigen.

10. Laseranordnung nach einem der vorstehenden Ansprüche, **dadurch gekennzeichnet,** daß die Treiberstufe (38) des Güteschalters (5) über ein UND-Gatter (36) angesteuert ist, durch das das Komparatorausgangssignal (23) mit einem den Pulsbetrieb des Lasers freigebenden Signal verknüpfbar ist.

11. Laseranordnung nach einem der Ansprüche 1 bis 10, **dadurch gekennzeichnet,** daß das Komparatorausgangssignal (23) über ein D-Flipflop (26) mit der Vorrichtung (5, 7) zum Abschalten des Lasers verbunden ist.

12. Laseranordnung nach Anspruch 11, **dadurch gekennzeichnet,** daß der invertierende Eingang (17) des Komparators (18) mit der Fotodiode (9) und der Ausgang (23) des Komparators (18) mit dem Takteingang (25) des D-Flipflops (26) verbunden ist, dessen Q̄-Ausgang (32) mit wenigstens einer Vorrichtung (5, 7) zum Abschalten des Lasers (1) verbunden ist.

13. Laseranordnung nach Anspruch 12, **dadurch gekennzeichnet,** daß der Q-Ausgang (33) des D-Flipflops (26) an eine Leuchtdiode (34) angeschlossen ist.

14. Laseranordnung nach einem der Ansprüche 11 bis 13, **dadurch gekennzeichnet,** daß der Rücksetzeingang (29) des D-Flipflops (26) an eine Rücksetztaste (31) angeschlossen ist.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| D,Y | US-A-4 181 899 (Y.S. LIU)<br>* Spalte 1, Zeilen 19-41; Spalte 3, Zeilen 43-53; Spalte 4, Zeilen 43-48; Spalte 5, Zeilen 11-13 *<br>--- | 1-6 | H 01 S 3/108<br>H 01 S 3/136 |
| D,Y | CH-A- 544 426 (BROWN, BOVERI & CIE)<br>* Spalte 4, Zeilen 33-37; Figur 5 *<br>--- | 1-6 | |
| D,Y | US-A-4 544 839 (B.S. WEIL et al.)<br>* Spalte 2, Zeilen 23-28 *<br>--- | 1-6 | |
| D,A | US-A-4 617 666 (K.C. LIU)<br>--- | | |
| D,A | FR-A-2 171 866 (C.G.A.E.)<br>----- | | |

RECHERCHIERTE SACHGEBIETE (Int. Cl.4)

H 01 S

Der vorliegende Recherchenbericht wurde für alle Patentansprüche erstellt

| Recherchenort | Abschlußdatum der Recherche | Prüfer |
|---|---|---|
| DEN HAAG | 18-04-1989 | GALANTI M. |

EPO FORM 1503 03.82 (P0403)

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument
........................................................................
& : Mitglied der gleichen Patentfamilie, übereinstimmendes Dokument